# EUROPEAN PATENT APPLICATION

(11) **EP 4 675 842 A1**
(43) Date of publication of application: **07.01.2026**
(21) Application number: 24763470.2
(22) Date of filing: 30.01.2024
(51) Int. Cl.: H01M 50/583, H01M 50/213, H01M 50/284, H01M 50/296, H01M 50/50

(54) **POWER SUPPLY DEVICE, OUTPUT CUT-OFF METHOD THEREFOR, AND MANUFACTURING METHOD**

(30) Priority: 27.02.2023 JP 2023028255
(71) Applicant: Panasonic Energy Co., Ltd., Moriguchi-shi, Osaka 570-8511 (JP)
(72) Inventor: NAKAMURA, Takuo, Osaka 571-0057 (JP); OONO, Yasuhiro, Osaka 571-0057 (JP)
(74) Representative: Eisenführ Speiser
(86) International application number: PCT/JP2024/002848
(87) International publication number: WO 2024/180985

(57) **Abstract**

A power supply device 100 includes an external output terminal 30, a battery assembly 10, a total output path 70 that connects the battery assembly 10 to an external connection terminal, a fusing unit 50 disposed on the total output path 70 and connected between the battery assembly 10 and the external output terminal 30, a housing 20 in which an internal storage space is defined for storing the battery assembly 10 and the fusing unit 50, and which has an installation face 22, a fusing path 74 branched at a portion between the external output terminal 30 and the fusing unit 50 on the total output path 70, and a water-submersion short-circuit terminal 80 disposed on the fusing path 74 in proximity to a terminal in which a potential of total output of the battery assembly 10 is present. The water-submersion short-circuit terminal 80 forms a closed circuit that short-circuits the battery assembly 10 and the fusing unit 50 by being conducted with the terminal in which a potential of total output of the battery assembly 10 is present. Inside the housing 20, the battery assembly 10 and the water-submersion short-circuit terminal 80 are disposed so as to be electrically spaced apart from the installation face 22.

## Description

### TECHNICAL FIELD

The present disclosure relates to a power supply device, as well as an output cut-off method and a manufacturing method for the power supply device.

### BACKGROUND ART

In various fields including power storage applications, a power supply device containing a plurality of secondary battery cells stored in a housing has been used to drive an electrical device by a rechargeable secondary battery, such as a lithium-ion secondary battery (e.g., Patent Literature 1). Electronic components are stored inside such power supply devices. In case where the power supply device is unintentionally submerged in water, countermeasures are needed to prevent situations where the electronic components is short-circuited and overheat.

As a countermeasure in case of water submersion, possible approaches include selecting waterproof products to be used for the electronic components themselves, or applying waterproof treatments such as potting or coating to the circuit board and the like. However, the waterproof components are large and expensive. In addition, the waterproof treatments also incur high costs.

### CITATION LIST

### PATENT LITERATURE

Patent Literature 1: Japanese Unexamined Patent Application Publication No. 2011-115030

### SUMMARY OF INVENTION

### TECHNICAL PROBLEM

One object of the present disclosure is to provide a power supply device with improved safety in the event of water submersion, as well as an output cut-off method and a manufacturing method for the power supply device.

### SOLUTION TO PROBLEM

A power supply device according to one embodiment of the present disclosure includes an external output terminal, a battery assembly including a plurality of secondary battery cells, a total output path that connects the battery assembly to an external connection terminal, a fusing unit disposed on the total output path and connected between the battery assembly and the external output terminal, a housing in which an internal storage space is defined for storing the battery assembly and the fusing unit, and which has an installation face, a fusing path branched at a portion between the external output terminal and the fusing unit on the total output path, and a water-submersion short-circuit terminal disposed on the fusing path in proximity to a terminal in which a potential of total output of the battery assembly is present, the water-submersion short-circuit terminal forming a closed circuit that short-circuits the battery assembly and the fusing unit by being conducted with the terminal in which a potential of total output of the battery assembly is present. The battery assembly and the water-submersion short-circuit terminal are disposed inside the housing so as to be electrically spaced apart from the installation face.

Further, an output cut-off method for a power supply device according to another embodiment of the present disclosure is an output cut-off method for cutting off output of the power supply device when the power supply device is submerged in water. The power supply device includes an external output terminal, a battery assembly including a plurality of secondary battery cells, a total output path that connects the battery assembly to an external connection terminal, a fusing unit disposed on the total output path and connected between the battery assembly and the external output terminal, a housing in which an internal storage space is defined for storing the battery assembly and the fusing unit, and which has an installation face, and a fusing path branched at a portion between the external output terminal and the fusing unit on the total output path. The output cut-off method includes disposing the power supply device in an orientation in which the installation face of the housing is a lower face, inside the housing, disposing the battery assembly in proximity to the installation face, disposing a water-submersion short-circuit terminal, which is disposed on the fusing path and connected in series with the battery assembly and the fusing unit while being disposed in proximity to a terminal in which a potential of total output of the battery assembly is present, in proximity to the installation face, and establishing conduction between the water-submersion short-circuit terminal and the terminal in which a potential of total output of the battery assembly is present through water inside the housing when the power supply device is submerged in water, thereby operating the fusing unit to cut off the total output path.

Further, a manufacturing method for a power supply device according to another embodiment of the present disclosure is a manufacturing method for a power supply device, which includes an external output terminal, a battery assembly including a plurality of secondary battery cells, a total output path that connects the battery assembly to an external connection terminal, a fusing unit disposed on the total output path and connected between the battery assembly and the external output terminal, a housing in which an internal storage space is defined for storing the battery assembly and the fusing unit, and which has an installation face, and a fusing path branched at a portion between the external output terminal and the fusing unit on the total output path. The manufacturing method includes, inside the housing, securing the battery assembly in proximity to the installation face, and securing a water-submersion short-circuit terminal, which is disposed on the fusing path and connected in series with the battery assembly and the fusing unit while being disposed in proximity to a terminal in which a potential of total output of the battery assembly is present, in proximity to the installation face.

### ADVANTAGEOUS EFFECTS OF INVENTION

In a power supply device according to one embodiment of the present disclosure, when the power supply device is submerged in water with the housing installed, conduction between the terminal in which the potential of the total output of the battery assembly is present and the water-submersion short-circuit terminal disposed on the installation face is established through water inside the housing to fuse the fusing unit, and the external output terminal is disconnected from the secondary battery cells, thereby improving safety.

### BRIEF DESCRIPTION OF DRAWINGS

FIG. 1 is a perspective view of a power supply device according to Embodiment 1;
FIG. 2 is an exploded perspective view of the power supply device of FIG. 1;
FIG. 3 is a perspective view of a battery assembly and a battery block of FIG. 2;
FIG. 4 is a schematic cross-sectional block diagram of the power supply device of FIG. 1;
FIG. 5 is a schematic cross-sectional view of a power supply device according to a comparative example;
FIG. 6 is a schematic cross-sectional view showing a state where the power supply device of FIG. 5 is partially submerged in water;
FIG. 7 is a schematic cross-sectional view showing a state where the power supply device of FIG. 5 is entirely submerged in water;
FIG. 8 is a schematic cross-sectional view showing a state where the power supply device of FIG. 4 is partially submerged in water;
FIG. 9 is a schematic cross-sectional view showing a state where the power supply device of FIG. 8 is further submerged in water;
FIG. 10 is a schematic cross-sectional view showing a state where the power supply device of FIG. 9 is further submerged in water;
FIG. 11 is a schematic cross-sectional view showing a state where the power supply device of FIG. 4 has recovered from water submersion;
FIG. 12 is an enlarged perspective view of the power supply device according to Embodiment 1;
FIG. 13 is an enlarged perspective view of the power supply device according to Embodiment 2;
FIG. 14 is an enlarged perspective view of the power supply device according to Embodiment 3;
FIG. 15 is an enlarged perspective view of the power supply device according to Embodiment 4;
FIG. 16 is a schematic cross-sectional view of the power supply device of FIG. 15;
FIG. 17 is an enlarged perspective view of the power supply device according to Embodiment 5;
FIG. 18 is an enlarged perspective view of the power supply device according to Embodiment 6; and
FIG. 19 is an enlarged perspective view of the power supply device according to Embodiment 7.

### DESCRIPTION OF EMBODIMENTS

The embodiments of the present disclosure may be specified by the following configurations and features.

A power supply device according to another embodiment of the present disclosure is as recited in the preceding embodiment, wherein the water-submersion short-circuit terminal and the terminal in which a potential of total output of the battery assembly is present are disposed on the same plane. This configuration allows both the terminal in which the potential of the total output of the battery assembly is present and the water-submersion short-circuit terminal to become submerged in water at approximately the same timing when the water level rises during water submersion, thereby enabling their conduction through water.

A power supply device according to another embodiment of the present disclosure is as recited in any preceding embodiments, wherein, in the housing, a first distance between a lower end of the water-submersion short-circuit terminal and the installation face is greater than a second distance between a lower face of the battery assembly and the installation face. This configuration allows conduction through water between the water-submersion short-circuit terminal and the terminal in which the potential of the total output of the battery assembly is present when the battery assembly becomes at least partially submerged in water. Conversely, when the battery assembly is not submerged in water, the fusing function of the fusing unit is not activated by the water-submersion short-circuit terminal, and operation of the power supply device can be maintained.

A power supply device according to still another embodiment of the present disclosure is as recited in any preceding embodiments, wherein the water-submersion short-circuit terminal includes a terminal piece formed into a flat plate, and the terminal piece is disposed in an orientation facing the terminal in which a potential of total output of the battery assembly is present.

A power supply device according to still another embodiment of the present disclosure is as recited in any preceding embodiments, wherein the terminal in which a potential of total output of the battery assembly is present is a negative-side terminal of the total output of the battery assembly, and is disposed in an orientation facing the water-submersion short-circuit terminal.

A power supply device according to still another embodiment of the present disclosure is as recited in any preceding embodiments, wherein the battery assembly has a serially-connected stacked configuration in which a side closer to the installation face is a low-voltage side. Such a configuration provides an advantage that, when the power supply device is submerged in water, the fusing unit on the low-voltage side of the battery assembly is fused at an early stage, thereby safely cutting off the high-voltage output.

A power supply device according to still another embodiment of the present disclosure is as recited in any preceding embodiments, further comprising a breaker connected between the battery assembly and the external output terminal, and a circuit board connected to the battery assembly. The breaker and the circuit board are disposed on an upper face side of the battery assembly. The above configuration provides an advantage of dual protection of the power supply device from overcurrent with a fusing unit and a resettable breaker.

A power supply device according to still another embodiment of the present disclosure is as recited in any preceding embodiments, wherein the housing is formed into a box with a hollow interior, and the external output terminal is provided on a side of the housing facing the installation face. The above configuration allows the external output terminal, which is at a high voltage, to be disposed in a position where water submersion is delayed in time when the power supply device is submerged in water, thereby increasing safety.

A power supply device according to still another embodiment of the present disclosure is as recited in any preceding embodiments, wherein the fusing unit is disposed on a corner of the housing. The above configuration allows the fusing unit to be brought into proximity to the installation face whichever side thereof facing the corner of the housing is used as the installation face. As a result, even if the housing is disposed as rotated by 90 degrees, the fusing unit can still function.

A power supply device according to still another embodiment of the present disclosure is as recited in any preceding embodiments, wherein the fusing unit is a fuse, a relay, or a breaker.

Embodiments of the present disclosure are described below with reference to the drawings. However, the embodiments shown below are only examples to illustrate the technical concepts of the present disclosure, and the present disclosure is not limited to these embodiments. Further, this specification does not limit any member in the claims to the members described in these embodiments. The dimensions, materials, shapes, relative positions, etc. of the components described in these embodiments are not intended to limit the scope of the present disclosure unless particularly otherwise specified, and are merely illustrative. It should be noted that the sizes, positional relationships, etc. of the members shown in the drawings may be exaggerated for clarity in the description. Furthermore, in the following description, the same names and reference numbers indicate the same or similar members, and detailed descriptions may be omitted as appropriate. Furthermore, each element constituting the present disclosure may be implemented such that a plurality of elements are formed from the same member, allowing a single member to serve as a plurality of elements, or that, conversely, the function of a single member is shared among a plurality of members.

The power supply device of the present disclosure can be used, for example, as a stationary power supply device, such as a backup power supply for servers, a power storage device for storing electricity generated by solar power or the like for households, business establishments, and factories, a power supply for peak cut during daytime, a power source for driving an assist bicycle, a power supply for an electric scooter for home delivery, an electric cart for use in locations such as golf courses, factories, and airports, and a self-propelled robot for home delivery, as well as a power supply for driving construction machinery or vehicles such as hybrid vehicles and electric vehicles. An indoor power supply device for power storage is described below as one embodiment of the present disclosure.

### [EMBODIMENT 1]

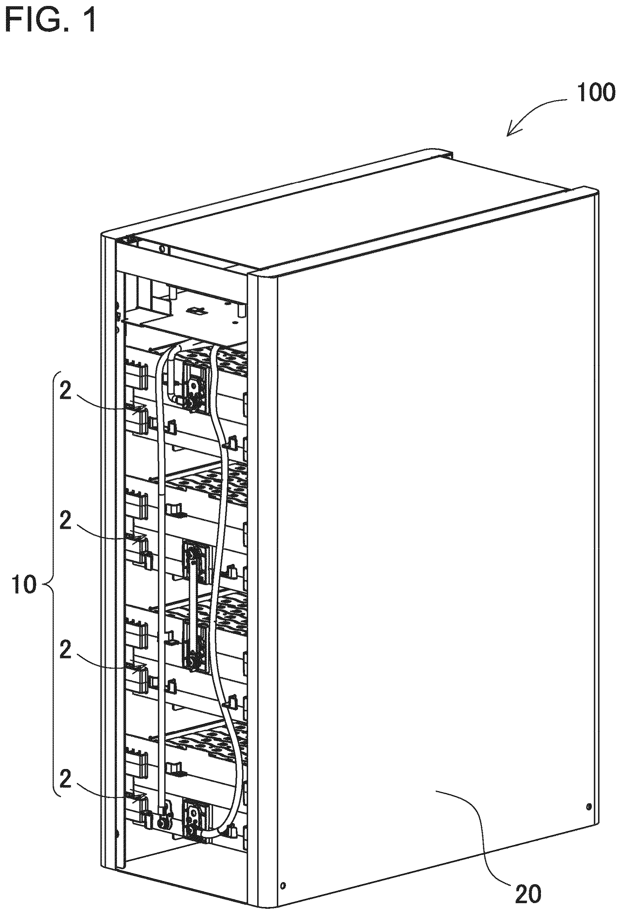

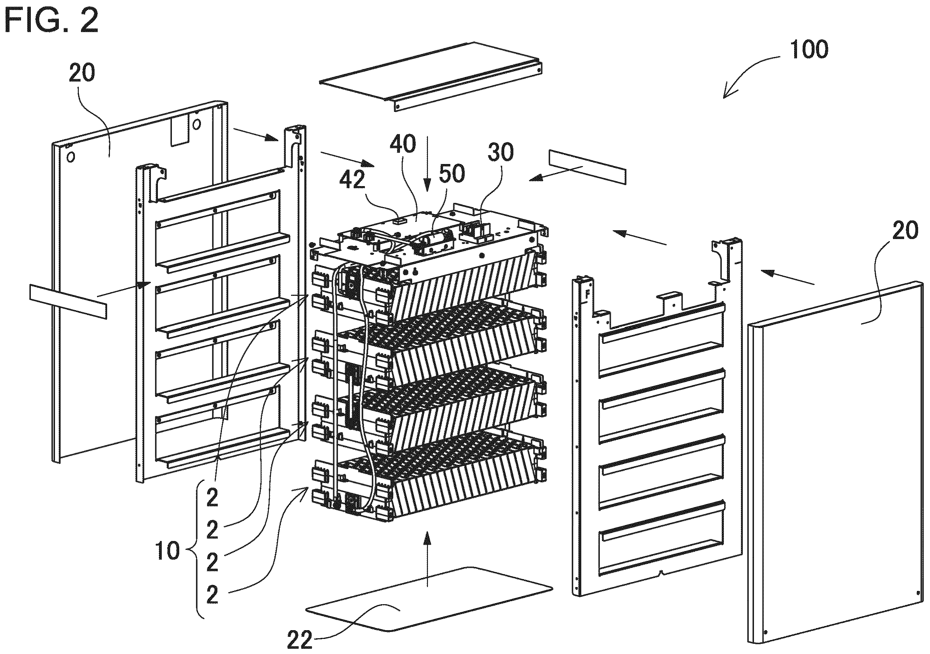

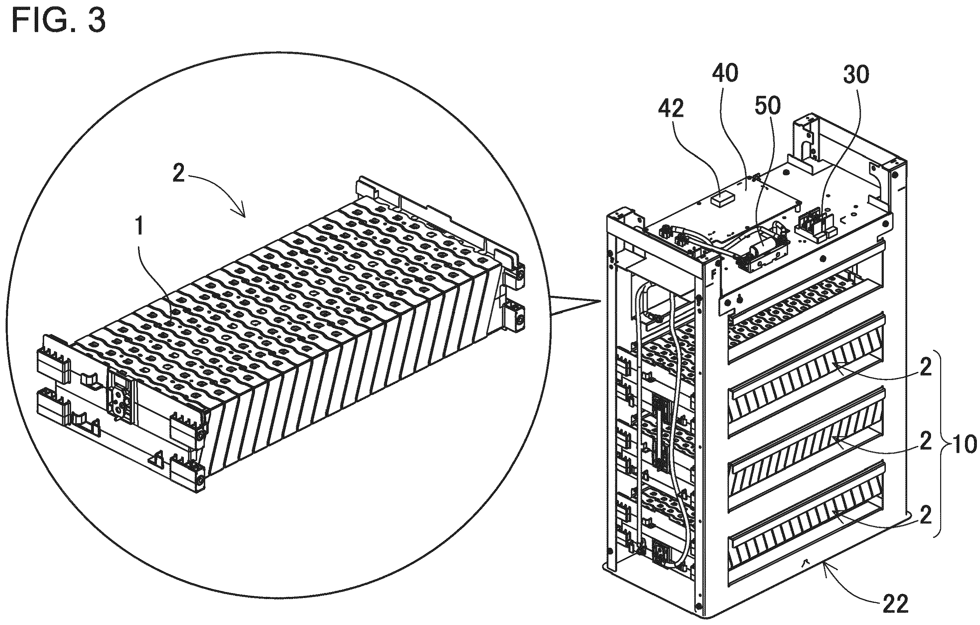

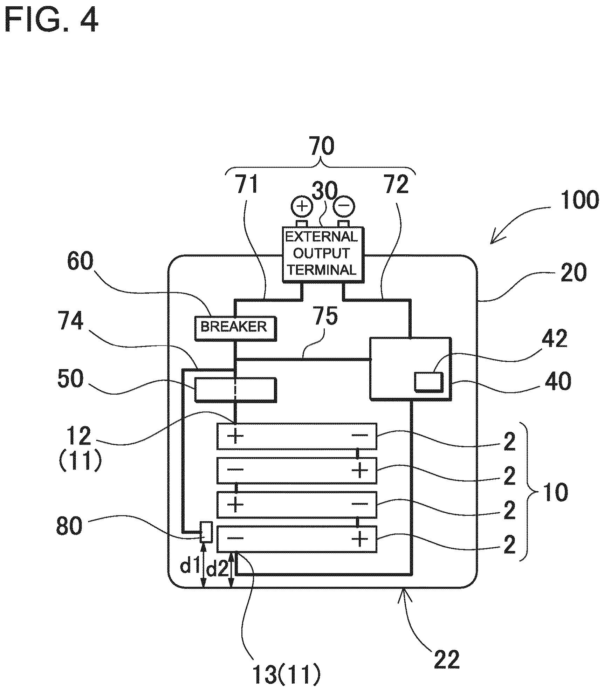

FIGs. 1 to 4 illustrate a power supply device 100 according to Embodiment 1 of the present disclosure. In these drawings, FIG. 1 is a perspective view of a power supply device 100 according to Embodiment 1, FIG. 2 is an exploded perspective view of the power supply device 100 of FIG. 1, FIG. 3 is a perspective view of a battery assembly 10 and a battery block of FIG. 2, and FIG. 4 is a schematic cross-sectional block diagram of the power supply device 100 of FIG. 1. The power supply device 100 shown in these figures includes a housing 20, an external output terminal 30, a total output path 70, a fusing path 74, a battery block 2, a circuit board 40, a fusing unit 50, a breaker 60, and a water-submersion short-circuit terminal 80.

### (Housing 20)

The outer shape of the housing 20 is formed into a box as shown in FIG. 1, and its interior forms a hollow storage space. As shown in FIG. 2, various members including the battery block 2, the circuit board 40, and the fusing unit 50 are stored in the storage space. Further, one face of the housing 20 serves as an installation face 22 that faces an installation region such as the floor. In the examples of FIGs. 1 to 4, the housing 20 is formed as a vertically elongated rectangular shape, with its bottom face serving as the installation face 22. The shape of the housing is not limited to this and may instead be cylindrical, polygonal, or the like. Further, for example, if a vertically elongated housing is placed horizontally, a long narrow face serves as the installation face. Such the housing 20 may be made of metal or a resin such as polycarbonate or ABS.

### (Battery Block 2)

The battery block 2 includes a plurality of secondary battery cells 1, as shown in FIG. 3. The battery block 2 holds the plurality of secondary battery cells 1 with a frame body. The plurality of secondary battery cells 1 are stacked in an orientation in which they are close to each other. Further, the electrodes of the secondary battery cells 1 are connected to each other by lead plates in series or in parallel.

### (Battery Assembly 10)

Further, the power supply device 100 may include a plurality of battery blocks 2. In the examples of FIGs. 2 and 4, four battery blocks 2 are stacked while being spaced apart from each other to form one battery assembly 10. As shown in FIG. 3, each battery block 2 constituting the battery assembly 10 includes a large number of secondary battery cells 1. In the example of FIG. 3, cylindrical secondary battery cells 1 are arranged in an upright orientation and connected in series and in parallel by lead plates. In this example, six secondary battery cells are connected in parallel and twenty-one secondary battery cells are connected in series. The number of secondary battery cells constituting the battery block, as well as the number of secondary battery cells connected in series and in parallel, are not limited to those shown in this example, and are appropriately designed according to, for example, specifications required for the power supply device. Further, similarly, the number of battery blocks to be stacked is also designed according to the specifications and the like. The battery assembly 10 stored inside the housing 20 is disposed such that the bottom face of the lowest battery block 2 in the battery assembly 10 is positioned in proximity to the installation face 22 while the battery block 2 is spaced apart from the installation face 22.

The battery assembly 10 preferably has a serially-connected stacked configuration such that the low-voltage side is positioned on the side closer to the installation face 22. With such a configuration, when the power supply device 100 is submerged in water, the fusing unit 50 on the low-voltage side of the battery assembly 10 is fused at an early stage, thereby safely cutting off the high-voltage output.

### (Secondary Battery Cell 1)

Each secondary battery cell 1 has positive and negative electrodes. The positive or negative electrode is preferably disposed on one of the end faces of the secondary battery cell 1. Suitable examples of batteries to be used for the secondary battery cell 1 include known secondary batteries, such as lithium-ion secondary batteries, nickel-metal hydride batteries, or nickel-cadmium batteries. Further, the outer can of the secondary battery cell may have a cylindrical, prismatic, or pouch-like shape.

### (Circuit Board 40)

The circuit board 40 is electrically connected to the battery assembly 10. The circuit board 40 includes a protection circuit, a charging/discharging circuit, and the like, for the secondary battery cells 1. Specifically, the circuit board 40 includes electronic components 42 that constitute various circuits. The circuit board 40 is a rectangular plate. As shown in FIG. 3, the circuit board 40 is disposed in a horizontal orientation on the upper face of the battery assembly 10. However, the orientation of the circuit board 40 to be disposed is not limited to the horizontal orientation and may instead be a vertical orientation (in FIG. 4, the circuit board 40 is disposed in a vertical orientation for drawing purposes). Suitable material examples of the circuit board 40 include rigid resins such as glass-epoxy substrates and ceramics.

### (Total Output Path 70)

The total output path 70 is an electrical path electrically connected to the total output of the battery assembly 10 and constitutes a power line. The total output path 70 is constituted of conductors such as harnesses and leads. On the total output path 70, the battery assembly 10, the breaker 60, the fusing unit 50, the circuit board 40, and the like, are disposed and electrically connected to each other.

### (External Output Terminal 30)

The external output terminal 30 is a terminal for outputting the total output of the battery assembly 10 to the outside. The external output terminal 30 is connected to the total output of the battery assembly 10 via the total output path 70. The total output path 70 includes a total positive line 71 that connects a positive-side terminal 12 of the total output terminals 11 of the battery assembly 10 to the external output terminal 30, and a total negative line 72 that connects a negative-side terminal 13 of the total output of the battery assembly 10 to the external output terminal 30. In the example of FIG. 4, the breaker 60 and the fusing unit 50 are disposed on the path of the total positive line 71, and the circuit board 40 is disposed on the path of the total negative line 72.

Preferably, the external output terminal 30 is disposed on the face of the housing 20 opposite to the installation face 22, which is the top surface in the example of FIG. 4. With this configuration, even if the power supply device 100 is submerged in water, the water level generally rises from the installation face 22, which thus can reduce the likelihood that the external output terminal 30 to which the total output is applied is exposed to water. Further, the external output terminal 30 may also serve as an external input/output terminal having an input terminal from outside.

### (Breaker 60)

The breaker 60 and the fusing unit 50 are provided between the battery assembly 10 and the external output terminal 30. In the example of FIG. 4, on the path of the total positive line 71, the fusing unit 50 is provided on the side of the battery assembly 10, and the breaker 60 is provided on the side of the external output terminal 30. The breaker 60 is a member that enhances safety by cutting off the electrical path when an overcurrent is detected in the total output from the battery assembly 10. This breaker 60 restores the electrical path from a cut-off state to a connected state when the overcurrent is no longer detected.

The breaker 60 is preferably disposed on the upper face side of the battery assembly 10. This allows dual protection of the power supply device 100 by the fusing unit 50 and the resettable breaker 60.

### (Fusing Unit 50)

The fusing unit 50 is connected between the battery assembly 10 and the external output terminal 30. The fusing unit 50 is also a member that enhances safety by cutting off the electrical path when an overcurrent is detected. However, once the fusing unit 50 detects an overcurrent, it remains in the cut-off state and does not recover even after the overcurrent subsides. A fuse is suitably used as such the fusing unit 50. In this way, the power supply device 100 enhances dual safety by the breaker 60 and the fusing unit 50. The operating current of the breaker 60 is set lower than that of the fusing unit 50. Thus, it is possible to provide the first protection with the operating current of the breaker 60, and the second protection with the operating current of the fusing unit 50.

The fusing unit 50 may be formed of a relay or breaker instead of a fuse. By using such a fusing unit with a recovery function, the power supply device can be reused when the current falls below the operating current of the fusing unit. Although it is preferable from a safety perspective not to continue using a secondary battery cell that has once been submerged in water, reuse may be possible depending on the usage conditions. For example, by installing the above structure outside a waterproof structure of a battery having the waterproof function inside, it becomes possible to mechanically cut off the power line in the event of water submersion and restore the connection after recovery. In the present disclosure, the term "fusing unit" is used to include, regardless of its name, elements such as relays and breakers that are capable of recovery operation. Furthermore, in the present disclosure, the term "fusing" of the fusing unit is not limited to a configuration in which a current is cut off by temperature-based fusing such as a thermal fuse, but also includes those in which the fusing unit is opened to cut off currents when it is a relay, breaker, switch, or the like.

### (Fusing Path 74)

A fusing path 74 is branched at a portion between the external output terminal 30 and the fusing unit 50 on the total output path 70. One end of the fusing path 74 is connected to the battery assembly 10. On the fusing path 74, the battery assembly 10, the fusing unit 50, and a water-submersion short-circuit terminal 80 are disposed. Connecting the fusing unit 50 and the battery assembly 10 in series on the fusing path 74 allows to electrically cut off the battery assembly 10 when the fusing unit 50 is fused, which enables to achieve physical protection against unsafe events. In the example of FIG. 4, the fusing path 74 is branched at a portion between the fusing unit 50 and the breaker 60 on the total output path 70. Similarly to the total output path 70, the fusing path 74 is also constituted of conductors such as harnesses and leads.

### (Water-Submersion Short-Circuit Terminal 80)

The water-submersion short-circuit terminal 80 is disposed on the fusing path 74 and is connected to the battery assembly 10 and the fusing unit 50. The water-submersion short-circuit terminal 80 is also disposed in proximity to a terminal in which the potential of the total output of the battery assembly 10 is present. By establishing conduction between the terminal in which the potential of the total output of the battery assembly 10 is present and the water-submersion short-circuit terminal 80 through water, a closed circuit for causing short circuit of the battery assembly 10 and the fusing unit 50 is formed. When the water-submersion short-circuit terminal 80 performs the conduction function due to water submersion, the closed circuit is connected, the battery assembly 10 is connected to the fusing unit 50, the fusing unit 50 is cut off, and the total output path 70 is opened.

The water-submersion short-circuit terminal 80 is disposed on the side of the installation face 22 inside the housing 20. With this configuration, when water submersion occurs with the housing 20 installed, the water-submersion short-circuit terminal 80 is short-circuited at the time point when the battery assembly 10 disposed below inside the housing 20 is partially submerged in water, and the fusing unit 50 is cut off to disconnect the external output terminal 30 from the battery assembly 10, thereby improving safety.

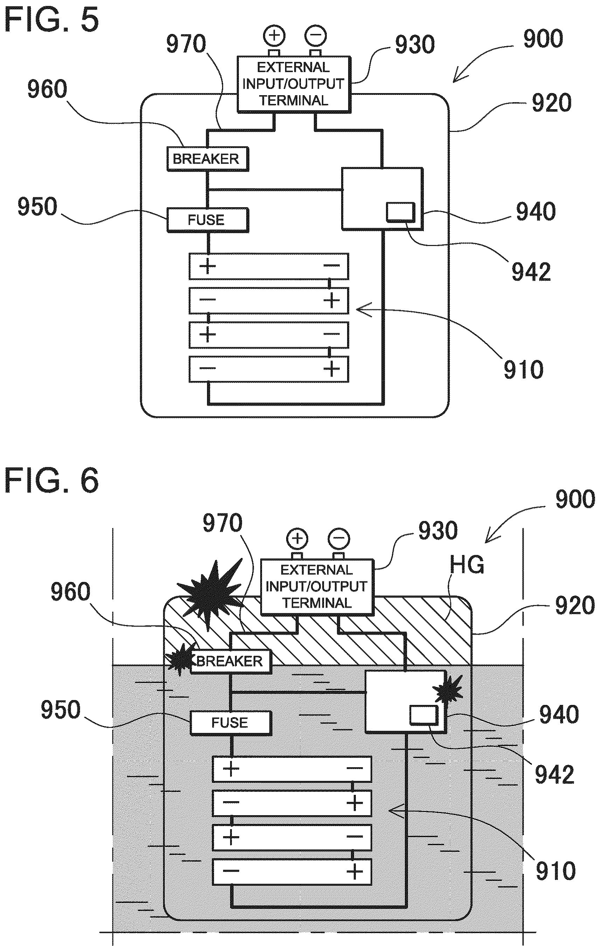

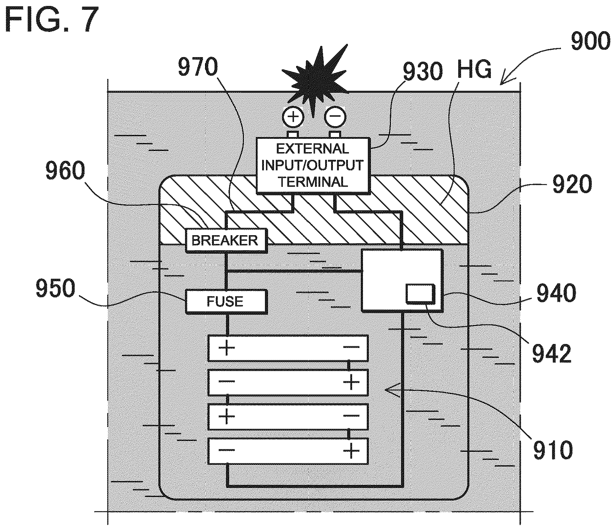

A power supply device 900 according to a comparative example is shown in the schematic diagram of FIG. 5. The power supply device 900 shown in this figure includes a battery assembly 910, a housing 920, an external input/output terminal 930, a circuit board 940, a fuse 950, a breaker 960, and a total output path 970. Electronic components 942 are mounted on the circuit board 940. When such the power supply device 900 is partially submerged in water due to a flood or the like, water enters inside the housing 920 as shown in FIG. 6, and the circuit board 940 and the fuse 950 are submerged in water. In this state, the fuse 950 is not fused, or before the fuse 950 is fused, the electronic components 942 mounted on the circuit board 940 is short-circuited and overheat, leading to unsafe events such as sparks or ignition. Furthermore, it is also considered that water is electrolyzed by the battery assembly 910 to generate hydrogen, which may ignite hydrogen gas HG accumulated in the housing 920. Also, in some cases, the power supply device 900 may become completely submerged in water, and if, as shown in FIG. 7, the fuse 950 is not fused in this state, a short circuit may occur within the external input/output terminals 930. Since such a short circuit within the external input/output terminals 930 is a short circuit between the total positive and total negative lines, it may cause ignition due to a large current. In particular, with the increasing voltage and size of power supply devices, the risk of ignition due to short-circuited electronic components also increases. Similarly, the generation amount and reaction rate of hydrogen due to electrolysis of water increase, leading to greater accumulation of the hydrogen gas HG accumulated in the housing 920, thereby increasing a risk of hydrogen explosion.

To reduce such risks during water submersion, one possible measure is to use waterproof components for the electronic components 942; however, waterproof components are large and expensive. Another possible measure is to apply waterproof treatments, such as potting or coating, to the circuit board 940 or the like, but these treatments also result in high costs.

In contrast, the power supply device 100 according to Embodiment 1 includes the water-submersion short-circuit terminal 80 for causing a short circuit in case of water submersion. By causing the water-submersion short-circuit terminal 80 to be submerged in water in the initial stage of water submersion for short-circuit through water and operating the fusing unit, energization is cut off, thereby reducing the risk of ignition and electrolysis. The details will be described below with reference to FIG. 4, FIGs. 8 to 11, etc.

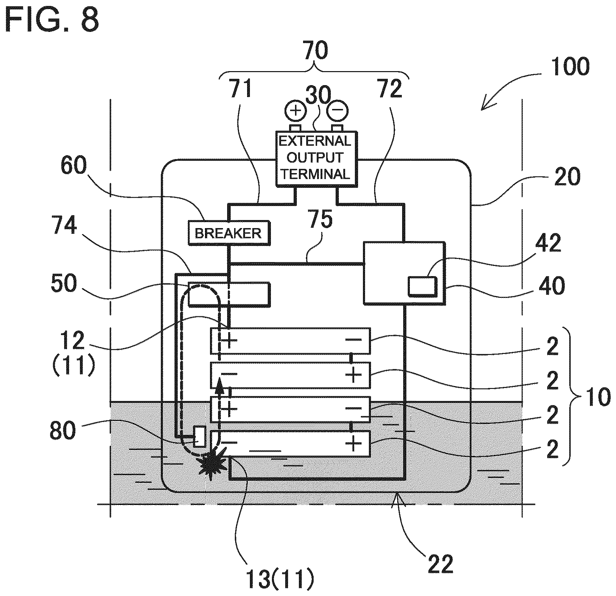

FIG. 8 shows a state in which the power supply device 100 of FIG. 4 is partially submerged in water. For example, if flooding occurs at the installation location of the power supply device and water flows into the housing, in the power supply device 900 such as that shown in FIG. 5, there is a risk that the battery assembly 910 may also be submerged in water. If the water level continues to rise and the battery assembly 910 or the circuit board 940 becomes submerged in water and is short-circuited, there is a concern that, as shown in FIG. 6, the electronic components 942 may overheat, or that, as shown in FIG. 7, a large current may flow through the total output path 70, generating heat or causing ignition.

In contrast, in the power supply device 100 of FIG. 8, the water-submersion short-circuit terminal 80 which is secured in proximity to the installation face 22 becomes submerged in water at an early stage. When the water-submersion short-circuit terminal 80 is submerged in water in the initial stage of water submersion, the water-submersion short-circuit terminal 80 enables its conduction through water before the battery assembly 10 or the circuit board 40 becomes submerged in water. The water-submersion short-circuit terminal 80 thereby causes a closed circuit to function as indicated by the dashed arrows. This causes the fusing unit 50 to be cut off, preventing voltage application to the electronic components 42 due to a short circuit, thereby avoiding heat generation and other related issues.

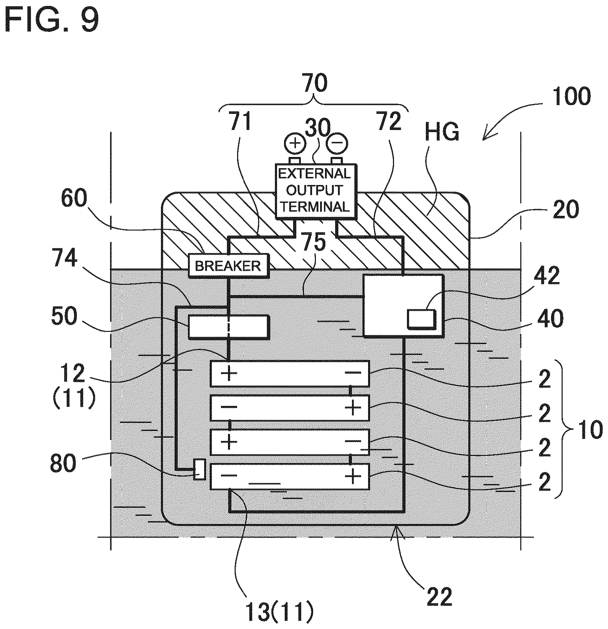

Furthermore, even if the water level continues to rise in such a state and the battery assembly 10 and the circuit board 40 become submerged in water as shown in FIG. 9, the fusing unit 50 has already functioned to cut off the total output path 70, thereby preventing heat generation or ignition of the electronic components 42. Further, even if the battery assembly 10 submerged in water electrolyzes water to generate hydrogen and the hydrogen gas HG is accumulated in the upper space inside the housing 20, no cause of fire such as ignition of the electronic components 42 can avoid the risk of ignition of the hydrogen.

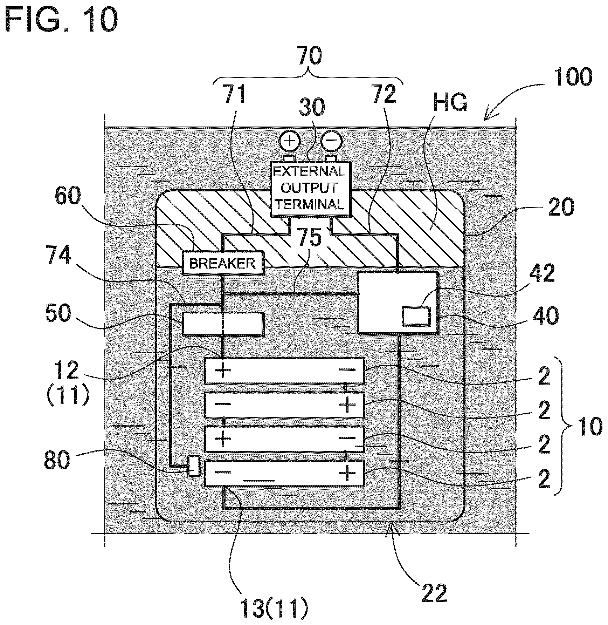

Furthermore, even if the power supply device 100 becomes completely submerged in water as shown in FIG. 10, and the external output terminal 30 is also submerged in water, the fusing unit 50 has already operated to cut off the total output path 70 as described above. As a result, high voltage is not applied to the external output terminal 30, and the hydrogen gas HG is not ignited. In this way, unsafe events can be avoided.

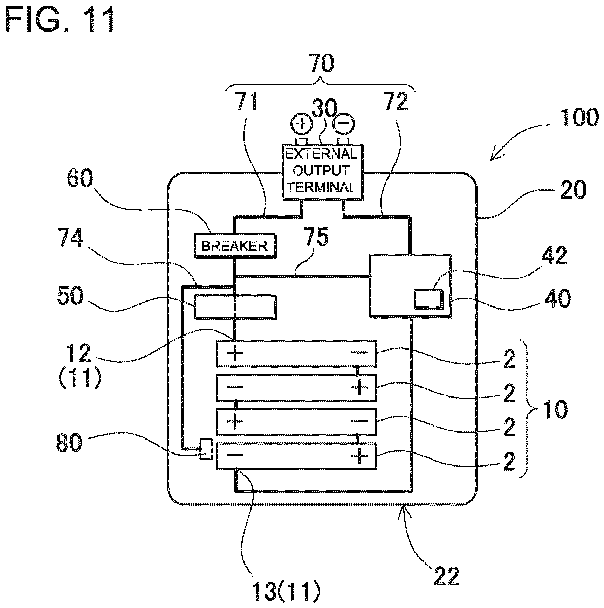

In addition, even after the water recedes as shown in FIG. 11, the total output path 70 remains cut off, making it impossible to reuse the power supply device 100. As a result, even if some or all of the secondary battery cells constituting the battery assembly 10 have some defect due to water submersion, recharging or re-discharging of the secondary battery cells is physically prevented, thereby preventing any accidental attempt to reuse the power supply device 100. This enhances safety.

As described above, by providing the water-submersion short-circuit terminal 80, unsafe events during water submersion can be avoided in the initial stage of water submersion, thereby enhancing safety. Moreover, with this configuration, it is sufficient to simply add the water-submersion short-circuit terminal 80 and the fusing path 74 for connection of the water-submersion short-circuit terminal 80, thus providing an advantage that improved safety can be added to the power supply device 100 with a simple and inexpensive structure.

It is preferable that the lower end of the water-submersion short-circuit terminal 80 and the terminal in which the potential of the total output of the battery assembly 10 is present be disposed on the same plane. This configuration allows both the terminal in which the potential of the total output of the battery assembly 10 is present and the water-submersion short-circuit terminal 80 to become submerged in water at approximately the same timing when the water level rises during water submersion, thereby enabling their conduction through water.

The water-submersion short-circuit terminal 80 is disposed inside the housing 20, in proximity to the installation face 22 on the lower side relative to the center of the housing 20. Here, it is preferable that the water-submersion short-circuit terminal 80 be disposed at a position spaced apart from the installation face 22 than the lower face of the battery assembly 10. More specifically, as shown in FIG. 4, etc., it is preferable that a first distance d1 between the lower end of the water-submersion short-circuit terminal 80 and the installation face 22 be greater than a second distance d2 between the lower face of the battery assembly 10 and the installation face 22. This configuration allows conduction through water between the water-submersion short-circuit terminal 80 and the terminal in which the potential of the total output of the battery assembly 10 is present when the battery assembly 10 becomes at least partially submerged in water. Conversely, when the battery assembly 10 is not submerged in water, the fusing function of the fusing unit 50 is not activated by the water-submersion short-circuit terminal 80, and operation of the power supply device 100 can be maintained. In other words, if the fusing unit 50 is operated in a state where the battery assembly 10 is not submerged in water, a situation is considered in which a usable power supply device with the battery assembly 10 not being damaged becomes unfunctional. Thus, the power supply device 100 according to the present embodiment avoids such an situation through operating the water-submersion short-circuit terminal 80 and performing fusing of the fusing unit 50 only when the battery assembly 10 is partially submerged in water. This ensures that the fusing function is executed at an appropriate situation and timing, thereby achieving both safety and functional preservation.

The terminal in which the potential of the total output of the battery assembly 10 is present may serve as, for example, a negative-side terminal 13 of the total output of the battery assembly 10. The negative-side terminal 13 is drawn from the total output of the battery assembly 10. Using such the negative-side terminal 13 of the total output present in the battery assembly 10 allows a simple configuration of one of the terminal pair that is conducted during water submersion.

On the other hand, the water-submersion short-circuit terminal 80, which serves as the other one of the terminal pair, is connected to one end of the fusing path 74. Specifically, as shown in FIG. 4, etc., the upper end of the fusing path 74 is connected such that the positive-side terminal 12 of the total output terminal 11 is drawn from outside the fusing unit 50, i.e., between the fusing unit 50 and the external output terminal 30. Further, the lower end of the fusing path 74 is extended toward the installation face 22, i.e., the lower face inside the housing 20. The water-submersion short-circuit terminal 80 is then connected to the lower end of the fusing path 74.

### (Example of Water-Submersion Short-Circuit Terminal 80)

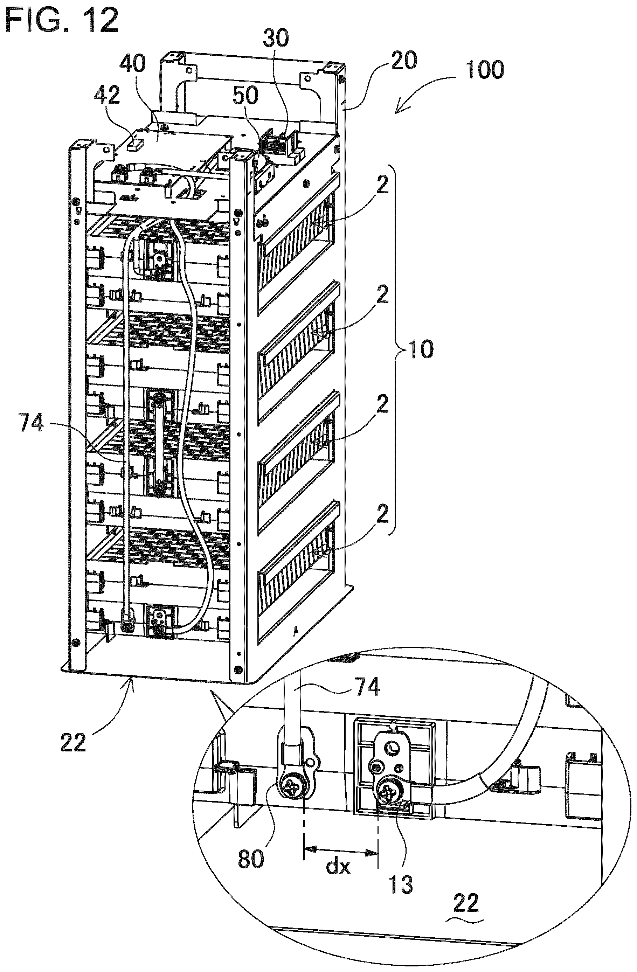

Preferably, the water-submersion short-circuit terminal 80 is secured to the battery assembly 10. One example of such the water-submersion short-circuit terminal 80 is shown in the perspective view of FIG. 12. The water-submersion short-circuit terminal 80 shown in the figure is disposed in proximity to the negative-side terminal 13. Further, the water-submersion short-circuit terminal 80 and the negative-side terminal 13 are disposed to be spaced apart from each other in the horizontal direction. Specifically, the water-submersion short-circuit terminal 80 and the negative-side terminal 13 are disposed such that they are present on the same plane, with their heights in the horizontal plane being approximately the same.

A distance dx between the water-submersion short-circuit terminal 80 and the negative-side terminal 13 is set to an appropriate insulation distance so as to prevent conduction under normal conditions. **In** addition, the distance dx is set to ensure that, in the event of water submersion, the water-submersion short-circuit terminal 80 and the negative-side terminal 13 are reliably brought into conduction through the water. Such the distance dx is determined according to factors such as the voltage of the battery assembly 10, the impurity concentration of the water during water submersion, and the like.

The fusing unit 50 may also be disposed at a corner inside the housing 20. This layout allows the fusing unit 50 to be positioned in proximity to the installation face 22 regardless of which of the two or four faces in which the corner is present serves as the installation face 22. As a result, even if the housing 20 is disposed as rotated by 90 degrees, the fusing unit 50 can still function.

### [EMBODIMENT 2]

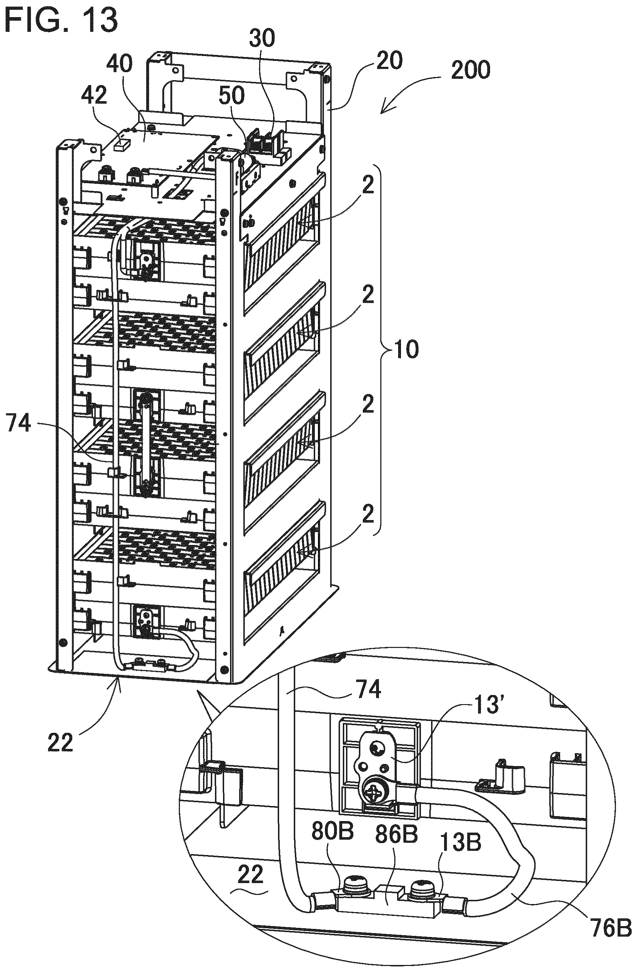

Further, although the water-submersion short-circuit terminal 80 is secured to the battery assembly 10 in the example of Embodiment 1, the present disclosure is not limited to this configuration, and the water-submersion short-circuit terminal may be secured to a different part. Similarly, the present disclosure is not limited to the configuration in which the negative-side terminal is secured to the battery assembly, and the negative-side terminal may be secured to a different part. FIG. 13 shows such an example as a power supply device 200 according to Embodiment 2. In the figure, the same members as those described above in Embodiment 1, etc. are given the same reference numbers and detailed descriptions are omitted as appropriate.

In the example of FIG. 13, both a water-submersion short-circuit terminal 80B and a negative-side terminal 13B are secured to the installation face 22. In this example, the water-submersion short-circuit terminal 80B and the negative-side terminal 13B are secured to a securing tool 86B, which is secured to the installation face 22, while being insulated and spaced apart from each other. The securing tool 86B is made of a material with an excellent insulating property, such as a resin block, and includes threaded holes into which the water-submersion short-circuit terminal 80B and the negative-side terminal 13B are screwed. The threaded holes are provided while being spaced apart from each other. That is, the water-submersion short-circuit terminal 80B and the negative-side terminal 13B are disposed to be electrically spaced apart from the installation face 22 by the presence of the securing tool 86B.

The negative-side terminal 13B is drawn from the negative-side terminal 13' of the battery assembly 10 to the installation face 22 via a second fusing path 76B.

### [EMBODIMENT 3]

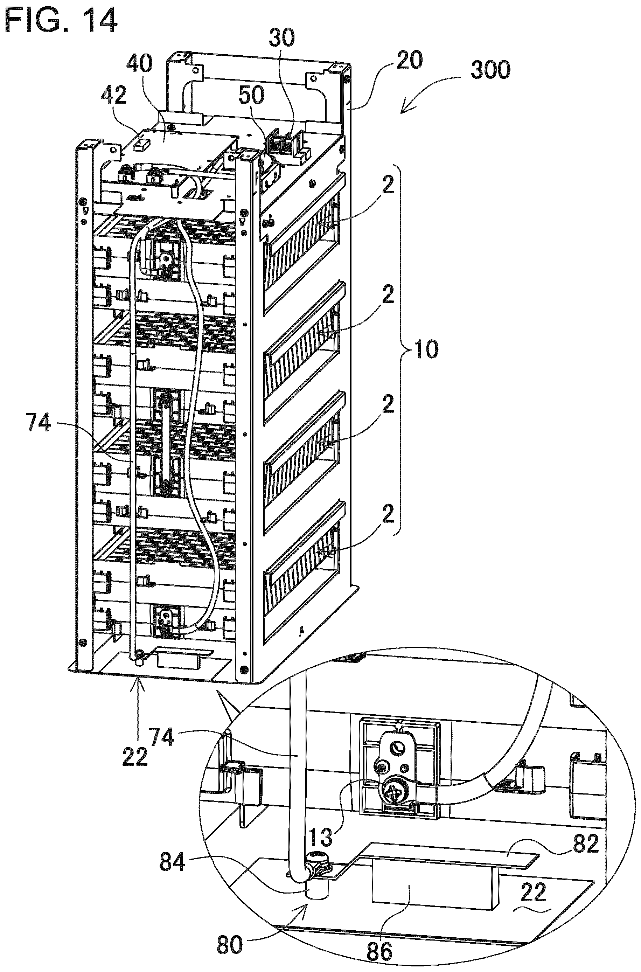

In the above example, the water-submersion short-circuit terminal 80 and the negative-side terminal 13 are disposed in proximity to each other, thereby establishing conduction through water in case of water submersion. On the other hand, to more reliably perform conduction function during water submersion, it is also preferable to increase the surface area of the electrodes disposed in proximity. FIG. 14 shows such an example as a power supply device 300 according to Embodiment 3. In this figure, the same members as those of the power supply device 100 according to Embodiment 1 described above are given the same reference numbers and detailed descriptions are omitted as appropriate.

In the power supply device 300 shown in FIG. 14, the water-submersion short-circuit terminal 80 is formed as a flat-plate terminal piece 82. By thus increasing the area of the terminal, the terminal can be brought into contact with water over a wider area during water submersion, thereby easily establishing conduction with the negative-side terminal 13. Further, the flat-plate terminal piece 82 is secured in an orientation facing the negative-side terminal 13. As a result, the terminal piece 82 is positioned in proximity to the negative-side terminal 13, thereby easily ensuring the conduction. Such the flat-plate terminal piece 82 is formed from a metal plate with excellent conductivity, such as nickel, aluminum, or copper. The terminal piece 82 may also be partially bent to bring itself closer to the negative-side terminal 13 or to adjust the distance between the terminal piece 82 and the negative-side terminal 13.

In the example of FIG. 14, the water-submersion short-circuit terminal 80 is secured by being screwed into a spacer 84 secured to the installation face 22. The spacer 84 can be made of, for example, an insulating resin boss or the like. Further, the terminal piece 82 is bent to be brought in proximity to the negative-side terminal 13, and the securing tool 86 is provided on the rear surface of the terminal piece 82 and secured to the installation face 22. The securing tool 86 can be made of, for example, an insulating resin block or the like. That is, the water-submersion short-circuit terminal 80, the terminal piece 82, and the negative-side terminal 13 are disposed to be electrically spaced apart from the installation face 22.

Further, in the example of FIG. 14, the terminal piece 82 of the water-submersion short-circuit terminal 80 is secured below the negative-side terminal 13 in a horizontal orientation. This allows the conduction to be established at the time point when the water level rises above the terminal piece 82 and reaches the negative-side terminal 13 during water submersion.

### [EMBODIMENT 4]

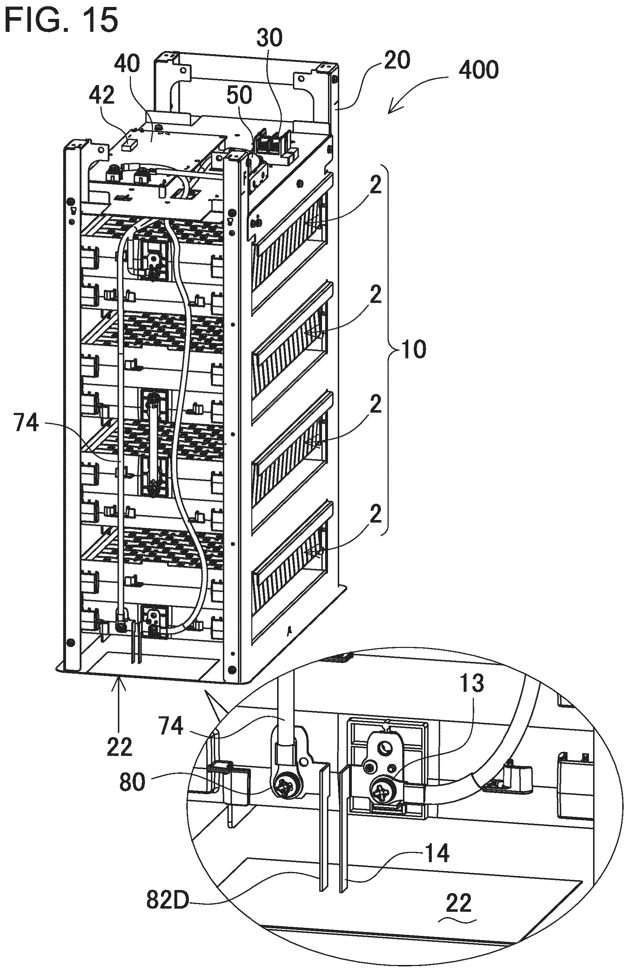

In Embodiment 3 described above, an example has been described in which the water-submersion short-circuit terminal 80 is formed as a flat plate. However, alternatively or in addition to this configuration, the terminal in which the potential of the total output of the battery assembly is present, such as the negative-side terminal, may be formed as a flat plate. FIG. 15 shows such an example as a power supply device 400 according to Embodiment 4. Again, in this figure, the same members as those described above in Embodiment 1, etc. are given the same reference numbers and detailed descriptions are omitted as appropriate.

In the power supply device 400 shown in FIG. 15, the negative-side terminal 13 and the water-submersion short-circuit terminal 80 are both formed as flat plates and disposed to face each other while being spaced apart from each other. Specifically, the negative-side terminal 13 and the water-submersion short-circuit terminal 80 are configured as a pair of parallel plates in which the terminal piece 82D and a negative-side terminal piece 14 that are formed by bending flat metal plates are secured in a parallel orientation such that they are spaced apart from each other at an approximately equal interval. This configuration facilitates the conduction through water between the parallel plates during water submersion and allows to reliably operate the fusing of the fusing unit 50. Further, preferably, the lower ends of the parallel plates are aligned in height to have substantially the same distance from the installation face 22. This makes it easier to fuse the fusing unit 50 at the intended timing. Furthermore, by adjusting the heights of the lower ends of the parallel plates from the installation face 22, it is possible to define the timing at which the fusing unit 50 is operated upon water submersion. The longer the lower ends of the parallel plates or the lower the height from the installation face 22 to the lower ends of the parallel plates, the earlier the fusing unit 50 is fused upon water submersion, which allows the battery assembly 10 to be reliably electrically cut off in the initial stage of water submersion, thus improving safety.

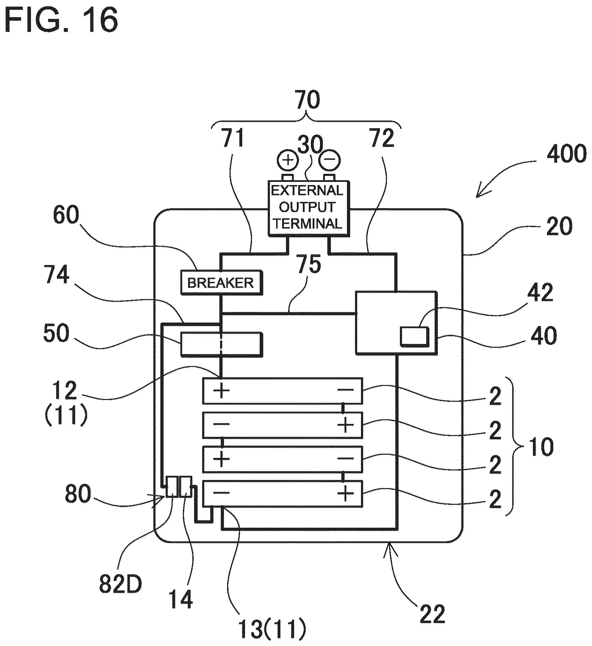

By thus adding the terminal piece 82 similar to that of the water-submersion short-circuit terminal 80 to the negative-side terminal 13, as shown in FIG. 16, the negative-side terminal 13 can be drawn to the side of the installation face 22 regardless of the layout, orientation, or position of the total output terminal of the battery assembly 10. This allows to stably fuse the fusing unit 50 in the initial stage of water submersion.

### [EMBODIMENT 5]

Further, in the configuration in which the flat-plate terminal piece 82D and negative-side terminal piece 14 form a pair of parallel plates, increasing the area of the parallel plates enhances the ease of the conduction through water, which allows to more reliably conduct the water-submersion short-circuit terminal 80 and the negative-side terminal 13 to fuse the fusing unit 50. To thus increase the area of the parallel plates that face each other, the length or width of each terminal piece may be increased. It is considered that just increasing the length of the terminal piece results in bringing the terminal piece into contact with the installation face depending on the space inside the housing. In such cases, bending the tip end of the terminal piece can enlarge the facing area by utilizing the space inside the housing.

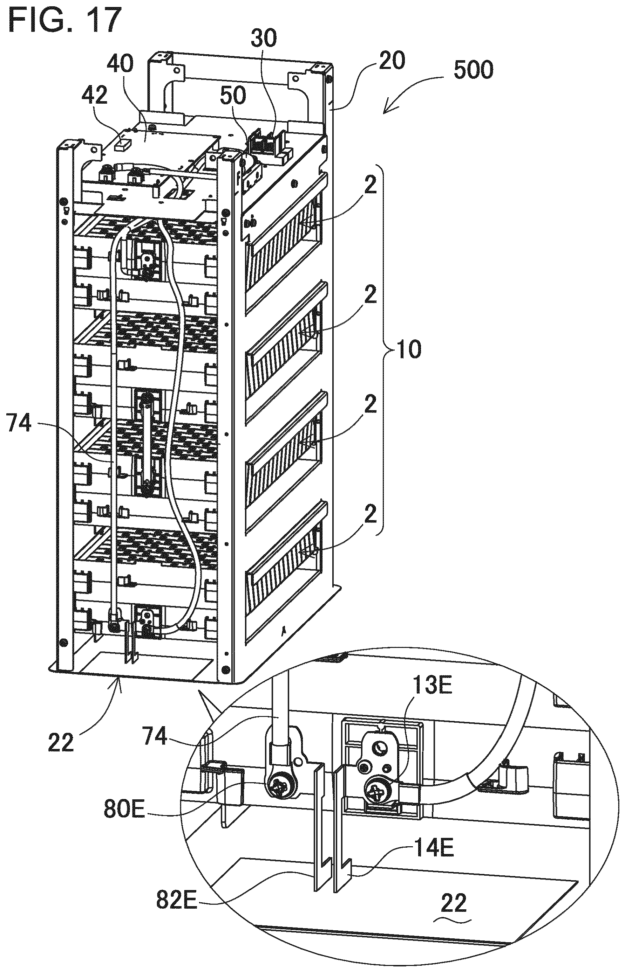

The perspective view of FIG. 17 shows such an example as a power supply device 500 according to Embodiment 5. Again, in this figure, the same members as those described above in Embodiment 1, etc. are given the same reference numbers and detailed descriptions are omitted as appropriate.

The power supply device 500 of FIG. 17 includes a flat-plate terminal piece 82E that constitutes a water-submersion short-circuit terminal 80E. The terminal piece 82E is extended toward the installation face 22 with its tip end bent into an L shape. The terminal piece 82E is bent in a direction toward the center of the installation face 22. Similarly, the negative-side terminal piece 14E of the negative-side terminal 13E is also bent into an L shape. With this configuration, the space between the installation face 22 and the battery assembly 10 within the housing 20 is effectively utilized to enlarge the facing area.

### [EMBODIMENT 6]

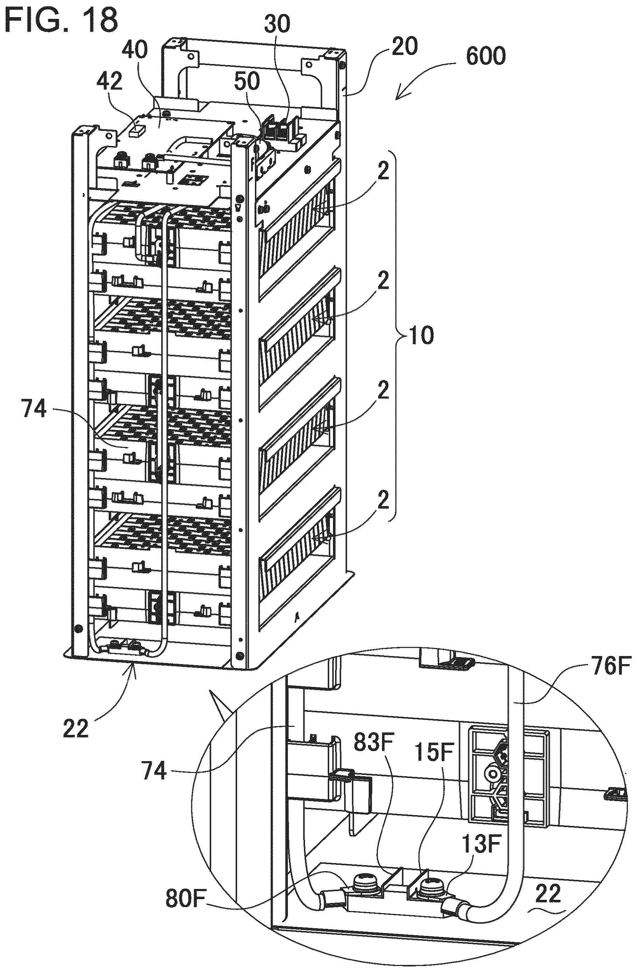

In the examples of FIG. 16, etc., the negative side of the total output faces the bottom face side of the battery assembly 10, which thus can relatively easily form a portion of conduction through water. However, depending on the orientation and connection state of the secondary battery cells constituting the battery assembly, the negative-side terminal of the battery assembly may not necessarily be positioned on the bottom face side, i.e., the side of the installation face of the housing. Even in such a case, according to the location of the total output in the battery assembly, drawing a branched second fusing path to the side of the installation face and providing the terminal in which the potential of the total output of the battery assembly is present, i.e., the negative-side terminal, on its tip end can establish the conduction through water in a similar way between the negative-side terminal and the water-submersion short-circuit terminal at an early stage of water submersion to operate the fusing function of the fusing unit. The perspective view of FIG. 18 shows such an example as a power supply device 600 according to Embodiment 6. Again, in this figure, the same members as those described above in Embodiment 1, etc. are given the same reference numbers and detailed descriptions are omitted as appropriate.

In the power supply device 600 shown in FIG. 18, a second fusing path 76F is branched from the total negative line 72 or a total negative terminal disposed at the upper portion and in which the total output of the battery assembly 10 is provided. The second fusing path 76F is drawn toward the side of the installation face 22 and is provided with a negative-side terminal 13F at its tip end. In this case, the negative-side terminal 13F and a water-submersion short-circuit terminal 80F are disposed while being electrically spaced apart from the installation face 22 by a securing tool. This allows the negative-side terminal 13F and the water-submersion short-circuit terminal 80F to be conducted through water at an early stage of water submersion to operate the fusing function of the fusing unit 50. As described above, even if the terminal in which the potential of the total output of the battery assembly is present is not always located on the side of the installation face (e.g., the bottom face) of the battery assembly, drawing the second fusing path can add a function to establish conduction with the water-submersion short-circuit terminal using water at the time of water submersion. To hold the drawn second fusing path 76F within the housing 20, a holder for the second fusing path 76F may be provided in a case of the battery assembly 10 or the housing 20, as necessary.

Further, parallel plates can also simply be added to each of the configurations in which the terminals are disposed in proximity to each other described above. As such simplified parallel plates, for example, metal plates bent into an L-shape with threaded holes for screwing may be used. In the example of FIG. 18, the threaded holes of the L-shaped bent pieces 83F and 15F are fastened together with the ring terminals of the water-submersion short-circuit terminal 80F and the negative-side terminal 13F. The bent piece 83F for the water-submersion short-circuit terminal 80F and the bent piece 15F for the negative-side terminal 13F are formed in a mirror-symmetrical shape so that the bent pieces 83F and 15F together constitute a pair of parallel plates. By adding such parallel plates, the surface area can be increased compared to using terminals alone, making it easier to enable conduction through water. The threaded holes of the bent pieces may be circular or elongated to allow fine adjustment of the positions of the bent pieces.

### [EMBODIMENT 7]

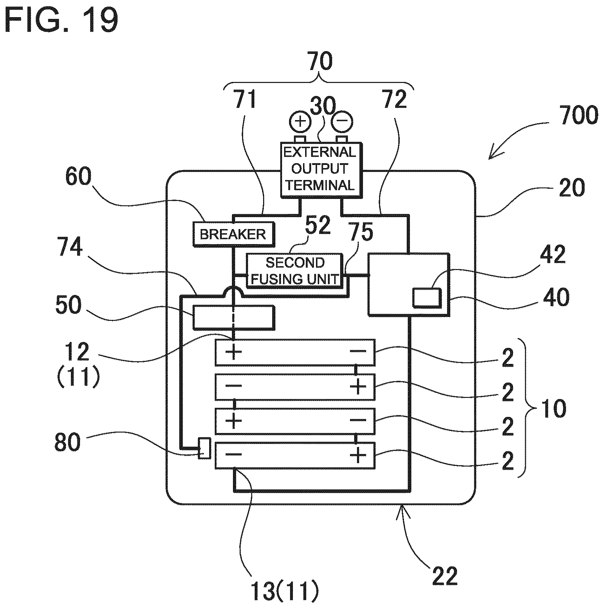

In the above examples, configurations have been described in which the total output path 70 serving as the power line is electrically cut off to electrically separate or insulate the battery assembly 10. However, the present disclosure does not limit the path to be electrically cut off to the total output path, nor does it limit the component to be electrically separated or insulated to the battery assembly; the present disclosure can also be applied to configurations in which other components with the possibility of heat generation or the like are electrically cut off. For example, in cases where only limited members such as electronic components mounted on a circuit board may generate heat or catch fire during water submersion, a fusing unit or a water-submersion short-circuit terminal is connected to a power supply line for feeding power to such heat-generating members. This makes it possible to operate the fusing unit before the heat-generating members become submersed in water, avoiding unsafe events such as overheating or ignition of the heat-generating members, or hydrogen explosions. Such a fusing unit may be added separately from the fusing unit for the battery assembly described above, or only a fusing unit for the heat-generating member may be provided in place of the fusing unit for the battery assembly. FIG. 19 shows an example as a power supply device 700 according to Embodiment 7 in which a second fusing unit 52 for heat-generating member is added separately from the fusing unit 50 for the battery assembly. In the power supply device 700 shown in this figure, the same members as those in Embodiment 1, etc. described above are given the same reference numbers and detailed descriptions are omitted as appropriate.

The power supply device 700 shown in FIG. 19 includes a battery assembly 10, an external output terminal 30, a total output path 70, a fusing path 74, a fusing unit 50, a breaker 60, a water-submersion short-circuit terminal 80, a circuit board 40, an electronic component 42 mounted on the circuit board 40 with a heat-generating member that has a possibility of overheating during water submersion, a power feed line 75 branched from the total output path 70 for feeding power to the electronic component 42, and a second fusing unit 52 disposed on the path of the power feed line 75.

The power feed line 75 is a line for obtaining a board activation voltage necessary to operate the circuit board 40, including the electronic component 42 mounted on the circuit board 40. The power feed line 75 is branched from the total output path 70 via a voltage converter that performs necessary voltage conversion.

The second fusing unit 52 is fused when an overcurrent is detected, thereby cutting off power supply to the circuit board 40. A thermal fuse or the like can be used as such the second fusing unit 52. By thus providing the second fusing unit 52 on the power feed line 75, the electronic component 42 mounted on the circuit board 40 can be protected. Generally, the consumption current supplied to the electronic component 42 of the circuit board 40 or the like is smaller than the input/output current of the power supply device. Therefore, compared to the fuse of the fusing unit 50 disposed on the path of the power line, the fuse disposed on the path of the power feed line 75 of the circuit board 40 has a smaller rating. As a result, protection of the heat-generating component can be achieved inexpensively by simply adding a fuse for a small short-circuit current.

In this way, even if a situation occurs in which the power supply device is unintentionally submersed in water, conduction between the water-submersion short-circuit terminal 80 and the low-voltage side of the battery assembly 10 is established through water before any unsafe event occurs, i.e., at an early stage of water submersion, to fuse the fusing unit 50, which allows to cut off the voltage application to components such as the electronic component 42, improving safety.

### [Output Cut-Off Method]

Here, an output cut-off method for protecting the power supply device 100 by forcibly causing short circuit when the power supply device 100 is submerged in water is described below. First, the power supply device 100 is installed in an orientation in which the installation face 22 of the housing 20 is the lower face. The power supply device 100 includes the external output terminal 30, the battery assembly 10 including a plurality of secondary battery cells 1, the total output path 70 that connects the battery assembly 10 to the external connection terminal, the fusing unit 50 that is disposed on the total output path 70 and connected between the battery assembly 10 and the external output terminal 30, the housing 20 in which an internal storage space is defined for storing the battery assembly 10 and the fusing unit 50, and which has the installation face 22, and the fusing path 74 branched at a portion between the external output terminal 30 and the fusing unit 50 on the total output path 70. With the power supply device 100 installed with the installation face 22 as the lower face, the battery assembly 10 is disposed in proximity to the side of the installation face 22 inside the housing 20. Further, the water-submersion short-circuit terminal 80, which is disposed on the fusing path 74 and connected in series with the battery assembly 10 and the fusing unit 50 while being disposed in proximity to a terminal in which the potential of the total output of the battery assembly 10 is present, is disposed in proximity to the installation face 22.

When the power supply device 100 becomes submerged in water, conduction between the water-submersion short-circuit terminal 80 and the terminal in which the potential of the total output of the battery assembly 10 is present is established through water inside the housing 20. This operates the fusing unit 50 and cuts off the total output path 70. In this manner, when water submersion occurs with the housing 20 thus installed, conduction between the terminal in which the potential of the total output of the battery assembly 10 is present and the water-submersion short-circuit terminal 80 disposed on the side of the installation face 22 is established through water inside the housing 20 to fuse the fusing unit 50, and the external output terminal 30 is disconnected from the battery assembly 10, thereby improving safety.

### [Manufacturing Method for Power Supply Device 100]

Further, a manufacturing method for such the power supply device 100 is described below. First, the power supply device 100 is prepared which includes the external output terminal 30, the battery assembly 10 including a plurality of secondary battery cells 1, the total output path 70 that connects the battery assembly 10 to the external connection terminal, the fusing unit 50 that is disposed on the total output path 70 and connected between the battery assembly 10 and the external output terminal 30, the housing 20 in which an internal storage space is defined for storing the battery assembly 10 and the fusing unit 50, and which has the installation face 22, and the fusing path 74 branched at a portion between the external output terminal 30 and the fusing unit 50 on the total output path 70. Inside the housing 20 of the power supply device 100, the battery assembly 10 is secured in proximity to the side of the installation face 22. Then, the water-submersion short-circuit terminal 80 disposed on the fusing path 74 and connected in series with the battery assembly 10 and the fusing unit 50 while being disposed in proximity to a terminal in which the potential of the total output of the battery assembly 10 is present, is secured in proximity to the side of the installation face 22. With this configuration, when water submersion occurs with the housing 20 thus installed, conduction between the terminal in which the potential of the total output of the battery assembly 10 is present and the water-submersion short-circuit terminal 80 disposed on the side of the installation face 22 is established through water inside the housing 20 to fuse the fusing unit 50, and the external output terminal 30 is disconnected from the battery assembly 10, thereby improving safety.

In the above examples, the power supply device is attached to an electrical device to be driven to supply power to the device. Additionally, when the remaining capacity of the power supply device is low or when the power supply device deteriorates over time, the power supply device can be replaced so that the electrical device remains usable. However, the power supply device of the present disclosure is not limited to a replaceable power supply device that typically stores secondary battery cells. The present disclosure is also applicable to embodiments in which secondary battery cells are stored within a housing of an electrical device. In the present disclosure, it is sufficient that a power supply device refers to the one in which secondary battery cells are stored in a housing such as a case, and thus the one in which secondary battery cells for driving are built into a housing of an electrical device itself is also referred to as a power supply device. In other words, the present disclosure is not limited to replaceable power supply devices, and is also applicable to electrical devices with built-in secondary battery cells.

### INDUSTRIAL APPLICABILITY

The power supply device according to the present disclosure is suitable for a power source for driving an assist bicycle, or a power source for driving self-propelled robots for home delivery, electric carts for home delivery and golf courses, electric scooters, construction machinery, as well as vehicles such as hybrid vehicles and electric vehicles. In addition, the power supply device according to the present disclosure can suitably be used as a power source for portable electrical devices such as radios, electric cleaners, and power tools, as well as stationary energy storage applications such as a backup power source for servers or a power supply for households, business establishments, and factories.

### REFERENCE SIGNS LIST

- 100, 200, 300, 400, 500, 600, 700: power supply device
- 1: secondary battery cell
- 2: battery block
- 10: battery assembly
- 11: total output terminal
- 12: positive-side terminal
- 13, 13B, 13E, 13', 13F: negative-side terminal
- 14, 14E: negative-side terminal piece
- 15F: bending piece
- 20: housing
- 22: installation face
- 30: external output terminal
- 40: circuit board
- 42: electronic component
- 50: fusing unit
- 52: second fusing unit
- 60: breaker
- 70: total output path
- 71: total positive line
- 72: total negative line
- 74: fusing path
- 75: power feed line
- 76, 76B: second fusing path
- 80, 80B, 80E, 80F: water-submersion short-circuit terminal
- 82, 82D, 82E: terminal piece
- 83F: bending piece
- 84: spacer
- 86: securing tool
- 900: power supply device
- 910: battery assembly
- 920: housing
- 930: external input/output terminal
- 940: circuit board
- 942: electronic component
- 960: breaker
- 970: total output path
- dx: distance between water-submersion short-circuit terminal and negative-side terminal
- d1: first distance; d2 ... second distance
- HG: hydrogen gas

## Claims

1. A power supply device comprising:
an external output terminal;
a battery assembly including a plurality of secondary battery cells;
a total output path that connects the battery assembly to an external connection terminal;
a fusing unit disposed on the total output path and connected between the battery assembly and the external output terminal;
a housing in which an internal storage space is defined for storing the battery assembly and the fusing unit, and which has an installation face;
a fusing path branched at a portion between the external output terminal and the fusing unit on the total output path; and
a water-submersion short-circuit terminal disposed on the fusing path in proximity to a terminal in which a potential of total output of the battery assembly is present, the water-submersion short-circuit terminal forming a closed circuit that short-circuits the battery assembly and the fusing unit by being conducted with the terminal in which a potential of total output of the battery assembly is present,
wherein inside the housing, the battery assembly and the water-submersion short-circuit terminal are disposed so as to be electrically spaced apart from the installation face.

2. The power supply device as recited in claim 1, wherein the water-submersion short-circuit terminal and the terminal in which a potential of total output of the battery assembly is present are disposed on the same plane.

3. The power supply device as recited in claim 1, wherein in the housing, a first distance between a lower end of the water-submersion short-circuit terminal and the installation face is greater than a second distance between a lower face of the battery assembly and the installation face.

4. The power supply device as recited in claim 1, wherein
the water-submersion short-circuit terminal includes a terminal piece formed into a flat plate, and
the terminal piece is disposed in an orientation facing the terminal in which a potential of total output of the battery assembly is present.

5. The power supply device as recited in claim 1, wherein the terminal in which a potential of total output of the battery assembly is present is a negative-side terminal of the total output of the battery assembly, and is disposed in an orientation facing the water-submersion short-circuit terminal.

6. The power supply device as recited in claim 1, wherein the battery assembly has a serially-connected stacked configuration in which a side closer to the installation face is a low-voltage side.

7. The power supply device as recited in claim 1, further comprising:
a breaker connected between the battery assembly and the external output terminal; and
a circuit board connected to the battery assembly,
wherein the breaker and the circuit board are disposed on an upper face side of the battery assembly.

8. The power supply device as recited in claim 1, wherein
the housing is formed into a box with a hollow interior, and
the external output terminal is provided on a side of the housing facing the installation face.

9. The power supply device as recited in any one of claims 1 to 8, wherein the fusing unit is disposed on a corner of the housing.

10. The power supply device as recited in any one of claims 1 to 8, wherein the fusing unit is a fuse, a relay, or a breaker.

11. An output cut-off method for a power supply device for cutting off output of the power supply device when the power supply device is submerged in water, the power supply device comprising:
an external output terminal;
a battery assembly including a plurality of secondary battery cells;
a total output path that connects the battery assembly to an external connection terminal;
a fusing unit disposed on the total output path and connected between the battery assembly and the external output terminal;
a housing in which an internal storage space is defined for storing the battery assembly and the fusing unit, and which has an installation face; and
a fusing path branched at a portion between the external output terminal and the fusing unit on the total output path,
the output cut-off method comprising:
disposing the power supply device in an orientation in which the installation face of the housing is a lower face;
inside the housing, disposing the battery assembly in proximity to the installation face;
disposing a water-submersion short-circuit terminal, which is disposed on the fusing path and connected in series with the battery assembly and the fusing unit while being disposed in proximity to a terminal in which a potential of total output of the battery assembly is present, in proximity to the installation face; and
establishing conduction between the water-submersion short-circuit terminal and the terminal in which a potential of total output of the battery assembly is present through water inside the housing when the power supply device is submerged in water, thereby operating the fusing unit to cut off the total output path.

12. A manufacturing method for a power supply device, the power supply device comprising:
an external output terminal;
a battery assembly including a plurality of secondary battery cells;
a total output path that connects the battery assembly to an external connection terminal;
a fusing unit disposed on the total output path and connected between the battery assembly and the external output terminal;
a housing in which an internal storage space is defined for storing the battery assembly and the fusing unit, and which has an installation face; and
a fusing path branched at a portion between the external output terminal and the fusing unit on the total output path,
the manufacturing method comprising:
inside the housing, securing the battery assembly in proximity to the installation face; and
securing a water-submersion short-circuit terminal, which is disposed on the fusing path and connected in series with the battery assembly and the fusing unit while being disposed in proximity to a terminal in which a potential of total output of the battery assembly is present, in proximity to the installation face.
